(19)

Europäisches
Patentamt
European
Patent Office
Office européen
des brevets

(11) **EP 3 929 767 A1**

(12) **EUROPEAN PATENT APPLICATION**

(43) Date of publication:
**29.12.2021 Bulletin 2021/52**

(51) Int Cl.:
***G06F 16/33*** (2019.01)          ***G06F 16/908*** (2019.01)
*G06F 16/903* (2019.01)          *G06K 9/46* (2006.01)
*G06K 9/68* (2006.01)          *G06N 3/00* (2006.01)
*G06N 3/08* (2006.01)

(21) Application number: **20214019.0**

(22) Date of filing: **15.12.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.06.2020 US 202016914302**

(71) Applicant: **INTEL Corporation
Santa Clara, CA 95054 (US)**

(72) Inventors:
• **Ahmed, Nesreen K.
Santa Clara, CA California 95054 (US)**
• **Sengupta, Dipanjan
Hillsboro, CA California 97124 (US)**
• **Anderson, Todd
Hillsboro, OR Oregon 97124 (US)**
• **Willke, Theodore
Portland, OR Oregon 97232 (US)**

(74) Representative: **Goddar, Heinz J.
Boehmert & Boehmert
Anwaltspartnerschaft mbB
Pettenkoferstrasse 22
80336 München (DE)**

(54) **SIMILARITY SEARCH USING GUIDED REINFORCEMENT LEARNING**

(57)     Systems, apparatuses and methods may provide for technology that identifies a query code, translates the query code into a query graph, generates a candidate vector based on a candidate graph, wherein the candidate graph is associated with a candidate code, generates a query vector based on the query graph, and determines a similarity measurement between the query vector and the candidate vector.

EP 3 929 767 A1

**Description**

<u>TECHNICAL FIELD</u>

Embodiments generally relate to identifying relevant information from large information repositories that store complex objects (e.g., objects that do not typically follow a natural order such as code snippets, images, audio). In detail, some embodiments provide a fast and efficient similarity search through large and varied corpus of objects.

<u>BACKGROUND</u>

The advent of sizeable data repositories has caused a massive increase in an amount of accessible data objects (e.g., code snippets spanning a wide array of different programming languages). The ability to search, categorize, and fully appreciate existing data repositories may be difficult. For example, a complexity of the objects may pose several challenges for existing methods to perform and scale over large collections of objects.

<u>BRIEF DESCRIPTION OF THE DRAWINGS</u>

The various advantages of the embodiments will become apparent to one skilled in the art by reading the following specification and appended claims, and by referencing the following drawings, in which:

FIG. 1 is a block diagram of examples of a computing architecture according to an embodiment;
FIG. 2 is a flowchart of an example of a method of searching and identification according to an embodiment;
FIG. 3 is an illustration of examples of code similarity searching according to an embodiment;
FIG. 4 is an illustration of examples of an artificial intelligence training process according to an embodiment;
FIG. 5 is an illustration of examples of search and pruning according to an embodiment;
FIG. 6 is a block diagram of an example of a computing system according to an embodiment;
FIG. 7 is an illustration of an example of a semiconductor apparatus according to an embodiment;
FIG. 8 is a block diagram of an example of a processor according to an embodiment; and
FIG. 9 is a block diagram of an example of a multi-processor based computing system according to an embodiment.

<u>DESCRIPTION OF EMBODIMENTS</u>

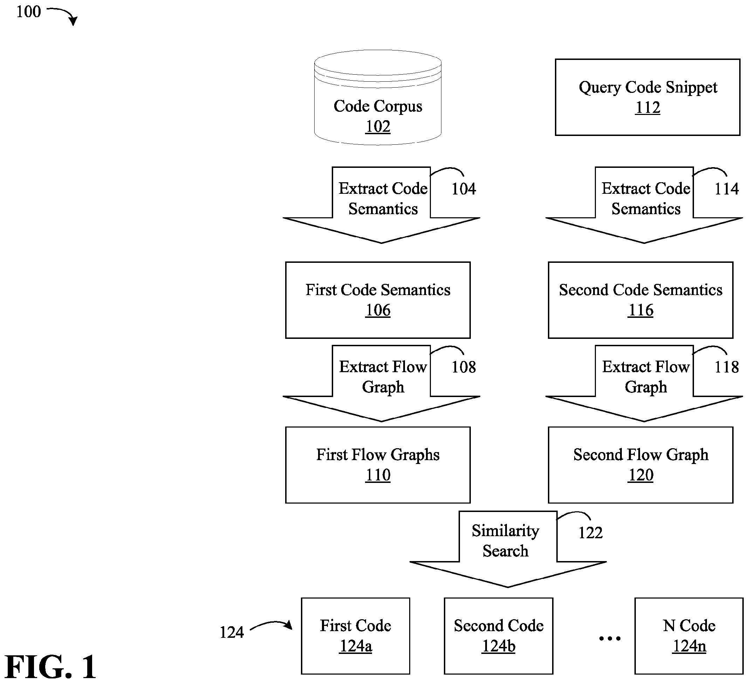

FIG. 1 illustrates a computing architecture 100. The computing architecture 100 may include a code corpus 102 that corresponds to a data repository. In detail, some data repositories may be directed to a specific topic. For example, some repositories may be code repositories, such as the code corpus 102, that include accessible code snippets in various programming languages.

A programmer may search the code corpus 102 to identify code that may enable a specific function or to enhance existing code (e.g., optimize existing code). Some embodiments may provide an enhanced searching process to provide an opportunity to remove some of the programming burden from programmers by efficiently identifying relevant code based on a search query, which in this case corresponds to the query code snippet 112.

For example, a software developer may have written code to process audio files. The software developer may seek to understand the manner in which other developers implemented similar methods that solve a same problem, how other developers optimized their code, how to handle exceptions and errors, or any other best practices that help the software developer to avoid writing code that could potentially crash the software application during production (e.g., mobile applications, online systems, etc.). In order to find similar code snippets, the software developer may execute a code similarity search based on the query code snippet 112 to search the code corpus 102 that allows the user to conduct a search query on the code corpus 102 based on the query code snippet 112 (e.g., a code syntax) authored by the software developer.

For example, code snippets that solve similar problems may be similar both in code structure and/or semantics. Thus, some embodiments implement an intelligent learning system that adaptively searches, learns and represents the semantics and structure of software codes. As illustrated architecture 100 extracts first code semantics 104 from the code corpus 102. For example, each body of code (e.g., code snippets) may be analyzed to extract first code semantics 106. The first code semantics 106 may be agnostic code expressions (e.g., not written in a specific high-level programming language and/or hardware).

The first code semantics 106 may include a plurality of representations of semantics, with each representation corresponding to a different code. It is worthwhile to note that the codes of the code corpus 102 may be associated with different high-level programming languages (e.g., Java, C++, etc.) while the first code semantics 106 may be representations of that codes without specific references or associations to high-level programming languages. For example, the first code semantics 106 may be associated with an intermediate language between a high-level programming language and a machine language. Similarly, the architecture 100 may analyze query code snippet 112 to extract code semantics 114 and generate second code semantics 116 (e.g., code expressions).

The system 100 may extract flow graph 108 based on the first code semantics 106 to generate first flow graphs 110. In some embodiments, the first flow graphs 110 represent the dependency among code expressions of the codes. For example, in each of the flow graphs 110, nodes may represent variables, functions, operations, and the edges may represent the flow or dependency among these nodes. Some embodiments may further distinguish between various dependency types such as data dependency (retrieve data to utilize) and execution dependency (e.g., conditional statements that are determined at runtime). Similarly, the architecture 100 extracts flow graph 118 from the second code semantics 116 to generate second flow graph 120. The second flow graph 120 is a representation of the query code snippet 112.

The architecture 100 may further conduct a pair-wise similarity search 122 between the first flow graphs 110 and the second flow graph 120. As such, the architecture 100 may output codes from the code corpus 102 that are identified to be similar to the query code snippet 112. For example, the architecture 100 may identify code snippets 124 that are similar to the query code snippet 112 based on comparisons of the first flow graphs 110 to the second flow graph 120. If one graph of the first flow graphs 110 is identified as being similar to the second flow graph 120 (e.g., a similarity score may be calculated representing the level of similarity), a code from the code corpus 102 associated with the one graph may be output as for example the first code 124a. Likewise the second code 124b may be associated with a graph of the first flow graphs 110 that is found to be similar to the second flow graph 120, and the N second code 124n may be associated with a graph of the first flow graphs 110 that is found to be similar to the second flow graph 120.

The code snippets 124 may be provided to a user (e.g., displayed). Thus, the architecture 100 may conduct a code similarity search that receives the query code snippet 112, searches a code corpus 102 (e.g., a large corpus) of code snippets based on the query code snippet 112, identifies a pair-wise code similarity measure, and executes a search and navigation algorithm to efficiently and effectively navigate the code corpus 102.

Thus, the computing architecture 100 may implement an efficient system for code similarity search with an efficient artificial intelligence (AI) navigation and search. The computing architecture 100 may be capable of learning and representing the semantics and relationships among code statements, and generating representations (e.g., hardware and language agnostic representations) across different programming languages and hardware architectures.

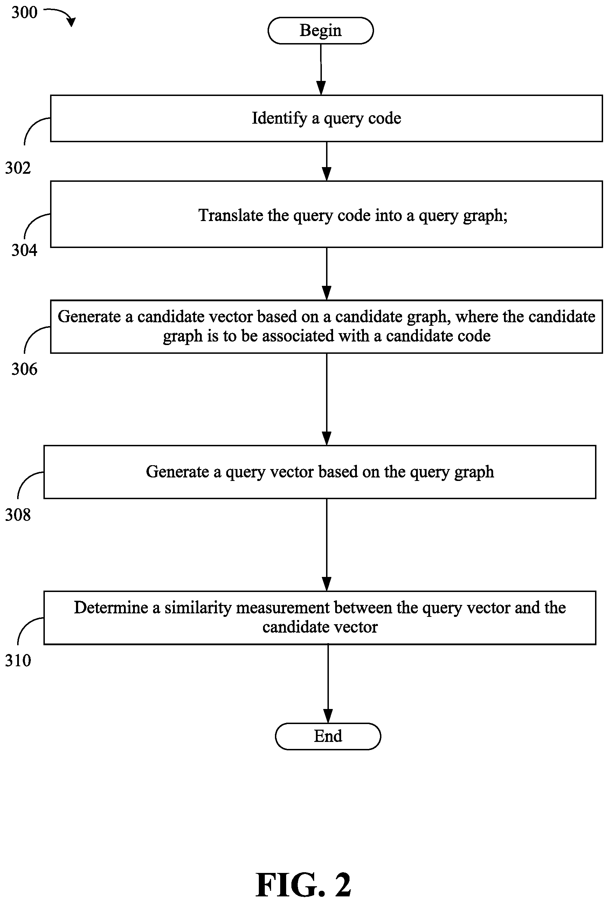

FIG. 2 shows a method 300 of searching and identification of relevant objects. The method 300 may generally be implemented in any of the embodiments described herein such as, for example, the computing architecture 100 (FIG. 1), already discussed. In an embodiment, the method 300 is implemented in one or more modules as a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof.

For example, computer program code to carry out operations shown in the method 300 may be written in any combination of one or more programming languages, including an object oriented programming language such as JAVA, SMALLTALK, C++ or the like and conventional procedural programming languages, such as the "C" programming language or similar programming languages. Additionally, logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Illustrated processing block 302 identifies a query code. Illustrated processing block 304 translates the query code into a query graph. Illustrated processing block 306 generates a candidate vector based on a candidate graph, where the candidate graph is to be associated with a candidate code. Illustrated processing block 308 generates a query vector based on the query graph. Illustrated processing block 310 determines a similarity measurement between the query vector and the candidate vector.

In some embodiments, the processing block 304 translates the query code from a source language into an intermediate representation that is a hardware agnostic representation of the query code, generates code expressions from the intermediate representation, and generates the query graph based on the code expressions, where the query graph is to represent dependencies between the code expressions.

In some embodiments, the method 300 includes determining whether to add the candidate graph to a similarity list based on the similarity measurement. In some embodiments, the method 300 includes identifying a plurality of graphs that each correspond to a different candidate code, generating a plurality of candidate vectors for the plurality of graphs, generating similarity scores between the plurality of candidate vectors and the query vector, and identifying a final graph from the plurality of graphs based on the similarity scores. In some embodiments, the method 300 further includes generating a function based on the final graph and a number of the plurality of graphs. In some embodiments, the query code corresponds to a search query by a first user (e.g., first user authored the query code), the query graph represents semantics and structure of the query code, the candidate code is associated (e.g., authored by) with a second user, the candidate graph represent semantics and structure of the candidate code, the query vector is a first sparse binary feature vector, the candidate vector is a second sparse binary feature vector, and the similarity measurement represents a level of similarity between the query code and the candidate code.

The method 300 may thus efficiently identify objects of interest from a large corpus of objects. The method 300 may enable an efficient search to find more correct, complete, or performant versions of pieces of code for example. The method 300 may thus combine accuracy and efficiency when searching.

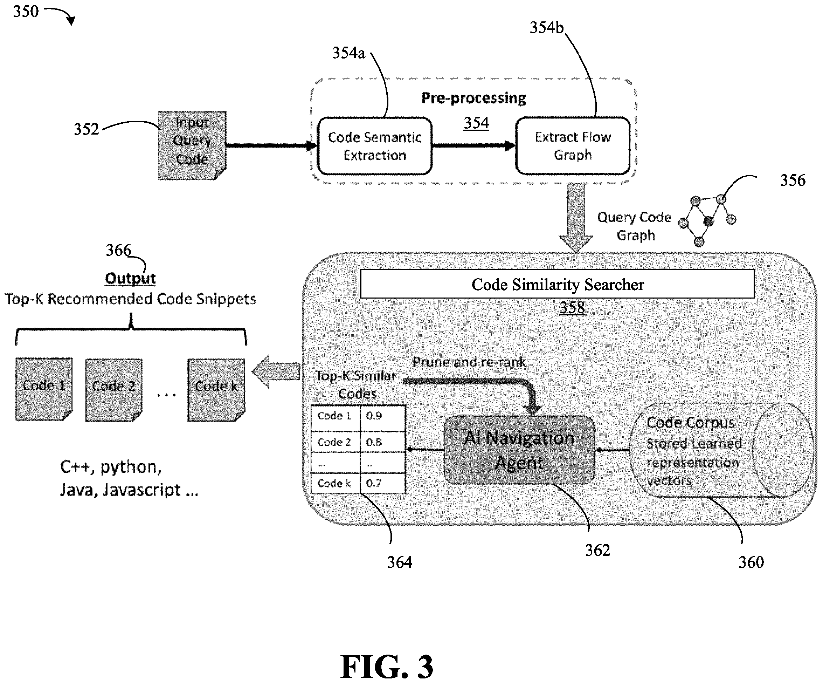

FIG. 3 illustrates an implementation of a code similarity search process 350 in a code recommendation application to identify similar code snippets from a repository. Process 350 may first identify a query code graph 356 (e.g., provided by a user).

The input query code 352 passes through preprocessing 354 that includes code semantic extraction 354a and flow graph extraction 354b. The output of the preprocessing 354 may be a query code graph 356 that is symbolically represented in FIG. 3. The query code graph 356 represents the semantics and structure of the input query code 352. The query code graph 356 may be given as an input to the code similarity searcher 358. The code similarity searcher 358 may generate a vector based on the query code graph 356. The code similarity searcher 358 may include an efficient AI navigation agent 362 that navigates a large combinatorial space of all code snippets in the code corpus 360 to generate top-K similar codes 364 that are similar to the input query code 352. The top-K similar codes 364 may be stored and identified from the code corpus 360 based on graphs and/or vectors of the top-K similar codes 364. For example, the graphs and/or vectors of the top-K similar codes 364 may be compared to the query code graph 356 and/or the vector based on the query code graph 356.

The code similarity searcher 358 may prune and re-rank top-K similar codes 364 in an iterative process executed by the AI navigation agent 362. After the code corpus 360 has been completely searched for codes similar to the input query code 352 and based on the query code graph 356, the top-K similar codes 364 may be output 366. Thus, the AI navigation agent 362 provides the top-K code recommendations (e.g., top-K similar code snippets) to a user. As discussed below, the AI navigation agent 362 may be trained to store a plurality of sparse binary feature vectors that represent the top-K similar codes 364 and compares the sparse binary feature vectors to a sparse binary feature vector that represents the query code graph 356.

For example, the code similarity searcher 358 may potentially leverage the efficient query performance of Stochastic Associative Search technology to further accelerate the navigation and search, by reducing memory reads (reading columns with only 1's in a vector representing the query code) and data transfer between host and memory.

While codes are discussed as exemplary examples herein, it will be understood that embodiments as described herein may apply to various applications beyond programming code, such as drug discovery, image similarity search, graph similarity search, such that the query input and items in the corpus are both represented as graphs and/or vectors.

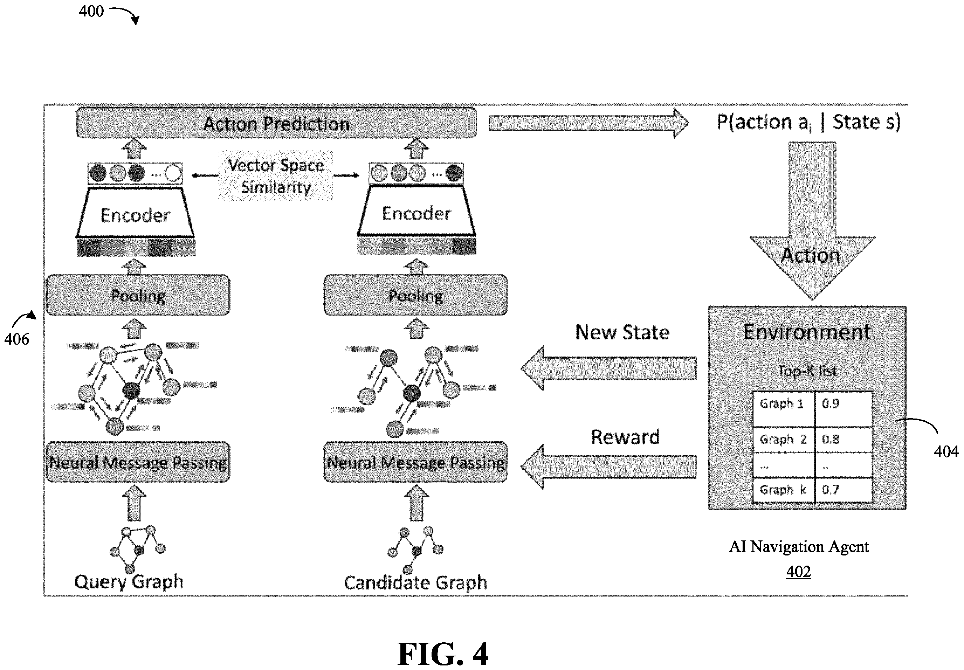

FIG. 4 illustrates an AI navigation agent 402 training process 400. The AI navigation agent 402 may undergo a training phase to learn a model and may learn how to navigate a search space and also index each code snippet in a corpus for efficient navigation. The AI navigation agent 402 does so by learning a sparse binary feature vector for each code snippet during training and as will be discussed below. The AI navigation agent 402 may correspond to any of the embodiments described herein, such as the AI navigation agent 362 and/or architecture 100.

Some compilers may enforce a clear separation between the source programming language (e.g., C++), the intermediate code representation(s) that may be optimized, and the machine code that gets mapped to the target hardware. Source codes may be in many different high-level programming languages. Thus extracting code semantics for one particular language may affect the universality of feature extraction. On the other hand, machine code may be targeted towards certain hardware and contains specific characteristics to the targeted hardware, and would thus impact the universality of feature extraction. Thus, the AI navigation agent 402 may operate based on intermediate representation (e.g., language) because the intermediate representation may be able to support multiple high-level programming languages allowing the AI navigation agent 402 to make cross-language code snippet suggestions while not avoiding encumbrances presented by hardware architectural details.

In the extraction step, the AI navigation agent 402 receives a code snippet as an input and outputs a list of code expressions that appear in the intermediate representation. Each code expression represents a code statement or an instruction that modifies a computer architecture's state in some fashion such as by multiplying two numbers or allocating memory resources. Some embodiments may further include generating code expressions that enumerate all possible outputs that lead to a certain variable, for example, that appear in certain programming statements such as "If conditions," loops, comparisons, etc. A more detailed example may include a code expression for multiplying a variable x by 3: %id = fmul double %x, 3.0.

After extracting all code expressions, the AI navigation agent 402 generates a flow graph that represents the dependency among code expressions of codes. In the flow graph, nodes may represent variables, functions, operations, and the edges represent the flow or dependency among these nodes. Moreover, the AI navigation agent 402 differentiate between two types of dependency, the data dependency (e.g., add two numbers), and execution dependency, which depends on the runtime execution flow (e.g., the output of if conditions, or comparison to a threshold, etc.). Thus, the AI navigation agent 402 may read the code expressions one-by-one, then adds nodes and edges to the flow graph to represent their relationships. These graph representations of code snippets may capture distant relationships and complex structural dependencies present in code. Thus, all codes (including query codes and the code that exists in the corpus) may be processed through the preprocessing and representation steps.

The AI navigation agent 402 efficiently navigates the combinatorial search space. The AI navigation agent 402 may be a reinforcement learning agent (e.g., guided reinforcement learning agent) that interacts with the environment (e.g., a set of candidate codes) in order to take actions that maximize the reward (e.g., achieving a goal by finding the most similar codes).

The AI navigation agent 402 interacts with the environment, updating a state, TOP-K list 404, and computing an expected reward. The AI navigation agent 402 may be a neural network model that predicts which candidate code snippet to keep and discard in the TOP-K list 404. The AI navigation agent 402 obtains the state of the environment and a policy network 406 (e.g., a process on a left side of FIG. 4) to predict which codes snippets are similar to the query code and preserves the codes in the TOP-K list 404 of the environment.

The AI navigation agent 402 may be trained on a given code corpus. Each code snippet in the corpus may be considered as a query code, and the AI navigation agent 402 actively searches the space of possibly similar codes by using the policy network 406. More specifically, the AI navigation agent 402 uses the policy network 406 in to predict which other candidate code snippets (represented as learned feature vectors) in the corpus are the most similar to the query code and should be kept in the TOP-K list 404.

The AI navigation agent 402 may implement a search and pruning strategy. For example, given a query code represented as a graph Q (e.g., query graph), a database of code snippets D = {d1, ..., dn}, the policy network 406 of the AI navigation agent 402 may be adjusted. For each code snippet in the corpus, a pre-computed list of the most similar codes to the code snippet may be identified (e.g., by a user or another process) for supervised learning to train the AI navigation agent 402. In some embodiments, there may be underlying similarity graphs that were pre-computed for the existing code corpus, and the AI navigation agent 402 navigates and enhances the similarity graph (e.g., during both training and inference) based on the underlying similarity graphs.

In order to search and prune the space, the AI navigation agent 402 starts with a code snippet referred to as "dtop" from a database D. The AI navigation agent 402 retrieves the most similar codes to dtop and uses a policy model M to predict which ones to keep because of their similarity to the query code Q as shown in "P(action $a_i$ | State s)," and adds the similar codes to the TOP-K list 404 ranked by their similarity score. Then, the AI navigation agent 402 picks the top candidate from the TOP-K list 404 which may be referred to as "dtop", and again retrieves the most similar codes to dtop and uses the policy model M to predict which ones to keep and adds them to the TOP-K list 404. The search procedure continues until termination (e.g., when there are no additional candidate codes to explore).

The AI navigation agent 402 takes the query and candidate code graphs and predicts the probability of each action in the space. For example, the AI navigation agent 402 predicts P(a|s), where a is an action in the action space of all possible actions (e.g., the action space may be {keep candidate code, discard candidate code}), and the state is the candidate code under evaluation. In some embodiments, since the action space is binary (e.g., keep or discard), the AI navigation agent 402 may use the policy network 406 to predict only the probability of keeping the candidate code in the TOP-K list 404.

In some embodiments, the TOP-K list 404 may be a data structure similar to a priority queue that is continuously maintained by the RL agent to rank the candidate codes based on their similarity scores (i.e., P(keep | candidate code)). As such, the AI navigation agent 402 continuously removes and prunes the non-similar codes and maintains only the most similar ones, for example in the TOP-K list 404. This process may be computed in parallel to accelerate the AI navigation agent 402. The TOP-K list 404 may be referenced during similarity searching as described above with respect to the code similarity search process 350 described above (FIG. 3) to identify similar codes.

The AI navigation agent 402 may be trained in sessions, each session containing a complete search procedure for an input query (i.e., until the search terminates). Once the search terminates, the agent obtains a reward for the session. The reward may be a composite function that balances accuracy and computation. More specifically, the reward may be a function of whether the agent was able to find a target (e.g., most similar codes), and the number of candidate code evaluations that the agent had to compute during the search procedure. Thus, the AI navigation agent 402 may be trained to identify relevant objects from the corpus, and may implement the function in future searches against the analyzed corpus.

The training phase may execute on a training dataset with ground truths, in the form of pairs of similar code snippets, which the system creates from the existing code corpus. Once trained to convergence, the AI navigation agent 402 may include a trained policy and model that recommends similar codes for unseen input query codes during the inference phase.

Thus, in some embodiments the AI navigation agent 402 learns an optimal policy and predicts the best action to take given the current state. The AI navigation agent 402 may takes a pair of graphs as input: the query graph and the candidate graph, which represents the graph of the input query code and the candidate code from the corpus respectively. Both graphs are the outputs of the preprocessing steps previously discussed. The AI navigation agent 402 includes two branches on the policy network 406 to process the pair of graphs. As illustrated, each branch contains the following elements: a neural message passing, an attention mechanism, a pooling function, and a binary encoder. The policy network 406 may receive an input graph G = (V, E) (any graph of the graph pair), where each node "V" in the input graph G is associated with an initial feature vector "$h_v$," that represents its initial attributes and meta-data.

For example, during the neural message passing step, the feature vectors at each node in the graph are updated using the following function:

$$h_v(t + 1) = f\left( h_v(t), \sum_{u \in N(v)} a_{uv} * h_u(t) \right)$$

Function 1

In Function 1, $N(v)$ is the set of neighbors of node v in the graph G, and $a_{uv}$ are learnable selective attention weights that learn and encodes the importance of dependencies in the code graph. The policy network 406 uses selective attention mechanisms to omit processing irrelevant relationships in the graph, to learn more accurate representations.

Further, the Function 1 may be a learnable differentiable function (e.g. a multi-layer perceptron). As such, neural message passing may propagate the relevant information and features across the graph.

After a pre-defined number of iterations of performing neural message passing, the AI navigation agent 402 implements a pooling function takes the node representations and aggregate them to compute a single feature vector representation for the entire graph, for both graph G and G':

$$h_G = f_G\left( \sigma\left( \sum_{v \in G} h_v \right) \right)$$

**Function 2**

The pooling function may output a non-binary latent graph representation. To accelerate the search procedure of the AI navigation agent 402, the policy network 406 contains a binary encoder that takes the non-binary representations $h_G$ and outputs a stochastic binary vector $y_G$, this is done by modeling the conditional Bernoulli distribution:

$$p(y_G(j) = 1 \,|h_G)$$

$$y_G = Encoder\ (h_G)$$

Function 3

Further, the AI navigation agent 402 has an action prediction function that takes the two graph representations (query graph, and candidate graph) and output the probability of whether to discard or keep the candidate graph based on the vector space similarity (e.g., based on whether the pooled vector of the query graph is similar to the pooled vector of the candidate graph). This prediction function may identify whether to keep or discard the graph based by computing a similarity score in vector space. Function 4 may correspond to the action prediction function:

$$P\ \{Keep\ |Candidate\ G'\} = M(y_G, y_{G'})$$

Function 4

Based on action, the AI navigation agent 402 may update the TOP-K list 404. Furthermore, the vector space similarity may be stored in the right column of the TOP-K list 404 and the graphs may be sorted according to the vector space similarity.

Some embodiments may further leverage Stochastic Associative Search. For example, the AI navigation agent 402 may be trained to produce sparse binary representation vectors for each code snippet represented as a graph in the corpus using a conditional Bernoulli distribution model. Once the AI navigation agent 402 is trained and converged, the binary representation vectors of the code snippets in the entire corpus can be pre-computed and stored in-memory and referenced during code similarity searches (e.g., query code vectors based on query codes are compared against the vectors of the code snippets).

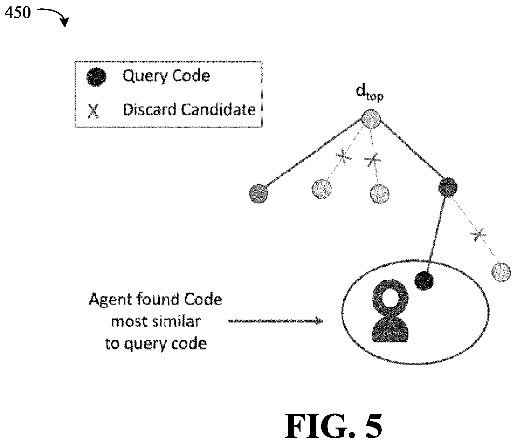

FIG. 5 illustrates a search and pruning procedure 450 implemented by an AI navigation agent according to any of the embodiments described herein. AI navigation agent navigates through the space of possible code candidates by predicting the next action to take, and find an optimal solution. The search space may be represented as a similarity graph, with the AI navigation agent navigating the graph.

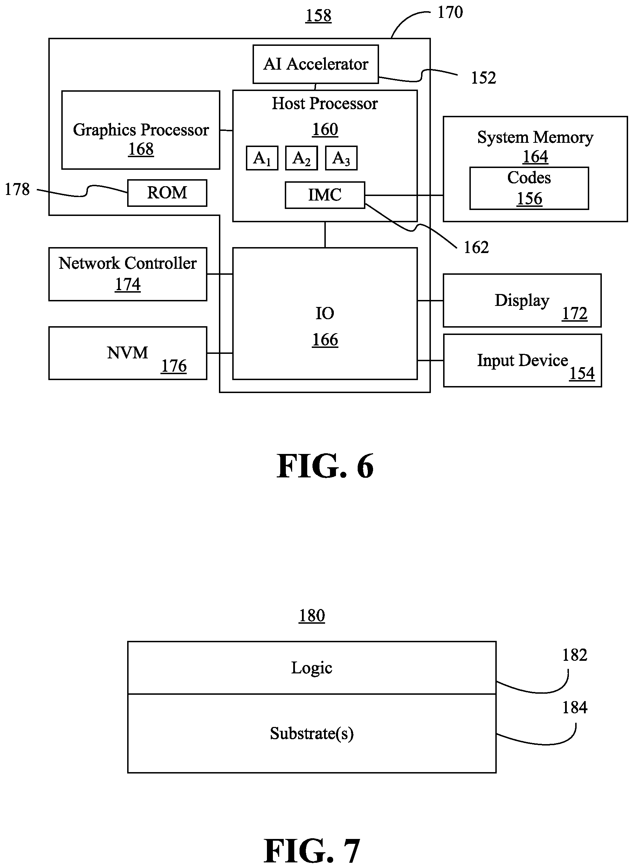

Turning now to FIG. 6, an enhanced search enabled computing system 158 (e.g., a computing device) is shown. The computing system 158 may generally be part of an electronic device/platform having computing functionality (e.g., personal digital assistant/PDA, notebook computer, tablet computer, convertible tablet, server), communications functionality (e.g., smart phone), imaging functionality (e.g., camera, camcorder), media playing functionality (e.g., smart television/TV), wearable functionality (e.g., watch, eyewear, headwear, footwear, jewelry), vehicular functionality (e.g., car, truck, motorcycle), etc., or any combination thereof. In the illustrated example, the system 158 includes a host processor 160 (e.g., CPU with one or more processor cores) having an integrated memory controller (IMC) 162 that is coupled to a system memory 164. The host processor 160 further includes accelerators $A_1$-$A_3$ (although any number of accelerators may be provided) to implement a neural network for searching and analysis. In some embodiments, the system 158 may further communicate through the network controller 174 with other electronic devices that also implement the neural network and/or control the other electronic devices based on an output (e.g., response level) of the neural network.

The illustrated system 158 also includes a graphics processor 168 (e.g., graphics processing unit/GPU) and an input output (IO) module 166 implemented together with the processor 160 (e.g., as microcontrollers) on a semiconductor die 170 as a system on chip (SOC), where the IO module 166 may communicate with, for example, a display 172 (e.g., touch screen, liquid crystal display/LCD, light emitting diode/LED display), a network controller 174 (e.g., wired and/or wireless), and mass storage 176 (e.g., HDD, optical disc, SSD, flash memory or other NVM). In some embodiments, the SoC 170 may further include processors (not shown) and/or AI accelerator 152 dedicated to artificial intelligence (AI) and/or neural network (NN) processing. For example, the system SoC 170 may include vision processing units (VPUs, not shown) and/or other AI/NN-specific processors, etc. In some embodiments, any aspect of the embodiments described herein may be implemented in the processors and/or accelerators dedicated to AI and/ or NN processing such as AI accelerator 152, the graphics processor 168 and/or the host processor 160.

The illustrated SOC 170 includes a ROM 178 with logic instructions, which when executed by the host processor 160 or graphics processor 168, cause the computing system 158 to implement and/or perform one or more aspects of the computing architecture 100 (FIG. 1), method 300 (FIG. 2), process 350 (FIG. 3), process 400 (FIG. 4) and/or pruning procedure 450 (FIG. 5), already discussed.

Thus, the illustrated system 158 may execute a search and pruning procedure. The system 158 may implement an efficient system for code similarity search with an efficient AI navigation and search. The system 158 may be capable of learning and representing the semantics and relationships among code statements, and generating representations (e.g., hardware and language agnostic representations) across different programming languages and hardware architectures to identify similar codes.

In some embodiments, the system 158 may receive code through the input device 154 (e.g., a keyboard and/or other peripheral device). The code may be compared to the codes 156 of the memory 164 to identify a most similar code from the codes 156 and provide the most similar code to the user, for example through display 172.

FIG. 7 shows a semiconductor package apparatus 180. The illustrated apparatus 180 includes one or more substrates 184 (e.g., silicon, sapphire, gallium arsenide) and logic 182 (e.g., transistor array and other integrated circuit/IC components) coupled to the substrate(s) 184. In one example, the logic 182 is implemented at least partly in configurable logic or fixed-functionality logic hardware. The logic 182 may implement and/or perform one or more aspects of the computing architecture 100 (FIG. 1), method 300 (FIG. 2), process 350 (FIG. 3), process 400 (FIG. 4) and/or pruning procedure 450 (FIG. 5), already discussed. In one example, the logic 182 includes transistor channel regions that are positioned (e.g., embedded) within the substrate(s) 184. Thus, the interface between the logic 182 and the substrate(s) 184 may not be an abrupt junction. The logic 182 may also be considered to include an epitaxial layer that is grown on an initial wafer of the substrate(s) 184.

In some embodiments, the logic 182 may further include processors (not shown) and/or accelerators (not shown) dedicated to AI and/or NN processing. For example, the logic 182 may include VPUs, and/or other AI/NN-specific processors, etc. In some embodiments, any aspect of the embodiments described herein may be implemented in the processors and/or accelerators dedicated to AI and/ or NN processing.

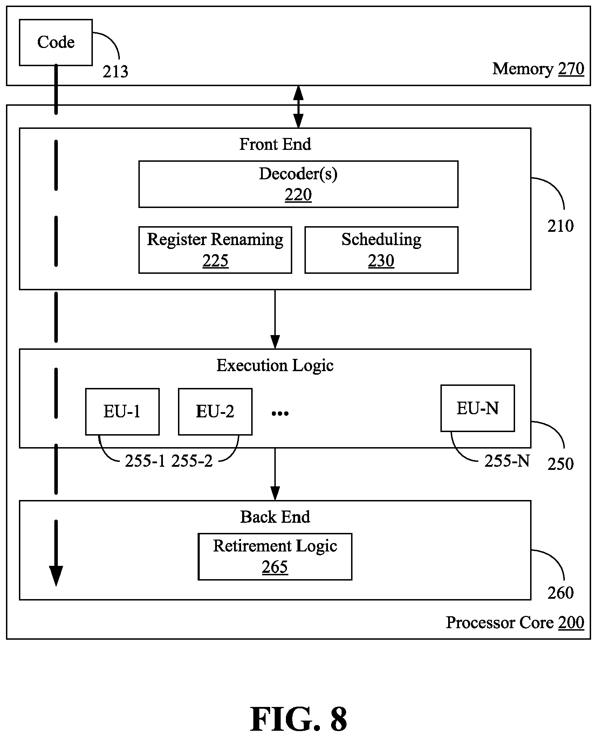

FIG. 8 illustrates a processor core 200 according to one embodiment. The processor core 200 may be the core for any type of processor, such as a micro-processor, an embedded processor, a digital signal processor (DSP), a network processor, or other device to execute code. Although only one processor core 200 is illustrated in FIG. 8, a processing element may alternatively include more than one of the processor core 200 illustrated in FIG. 8. The processor core 200 may be a single-threaded core or, for at least one embodiment, the processor core 200 may be multithreaded in that it may include more than one hardware thread context (or "logical processor") per core.

FIG. 8 also illustrates a memory 270 coupled to the processor core 200. The memory 270 may be any of a wide variety of memories (including various layers of memory hierarchy) as are known or otherwise available to those of skill in the art. The memory 270 may include one or more code 213 instruction(s) to be executed by the processor core 200, wherein the code 213 may implement and/or perform one or more aspects of the computing architecture 100 (FIG. 1), method 300 (FIG. 2), process 350 (FIG. 3), process 400 (FIG. 4) and/or pruning procedure 450 (FIG. 5), already discussed. The processor core 200 follows a program sequence of instructions indicated by the code 213. Each instruction may enter a front end portion 210 and be processed by one or more decoders 220. The decoder 220 may generate as its output a micro operation such as a fixed width micro operation in a predefined format, or may generate other instructions, microinstructions, or control signals which reflect the original code instruction. The illustrated front end portion 210 also includes register renaming logic 225 and scheduling logic 230, which generally allocate resources and queue the operation corresponding to the convert instruction for execution.

The processor core 200 is shown including execution logic 250 having a set of execution units 255-1 through 255-N. Some embodiments may include a number of execution units dedicated to specific functions or sets of functions. Other embodiments may include only one execution unit or one execution unit that can perform a particular function. The illustrated execution logic 250 performs the operations specified by code instructions.

After completion of execution of the operations specified by the code instructions, back end logic 260 retires the instructions of the code 213. In one embodiment, the processor core 200 allows out of order execution but requires in order retirement of instructions. Retirement logic 265 may take a variety of forms as known to those of skill in the art (e.g., re-order buffers or the like). In this manner, the processor core 200 is transformed during execution of the code 213, at least in terms of the output generated by the decoder, the hardware registers and tables utilized by the register renaming logic 225, and any registers (not shown) modified by the execution logic 250.

Although not illustrated in FIG. 8, a processing element may include other elements on chip with the processor core 200. For example, a processing element may include memory control logic along with the processor core 200. The processing element may include I/O control logic and/or may include I/O control logic integrated with memory control logic. The processing element may also include one or more caches.

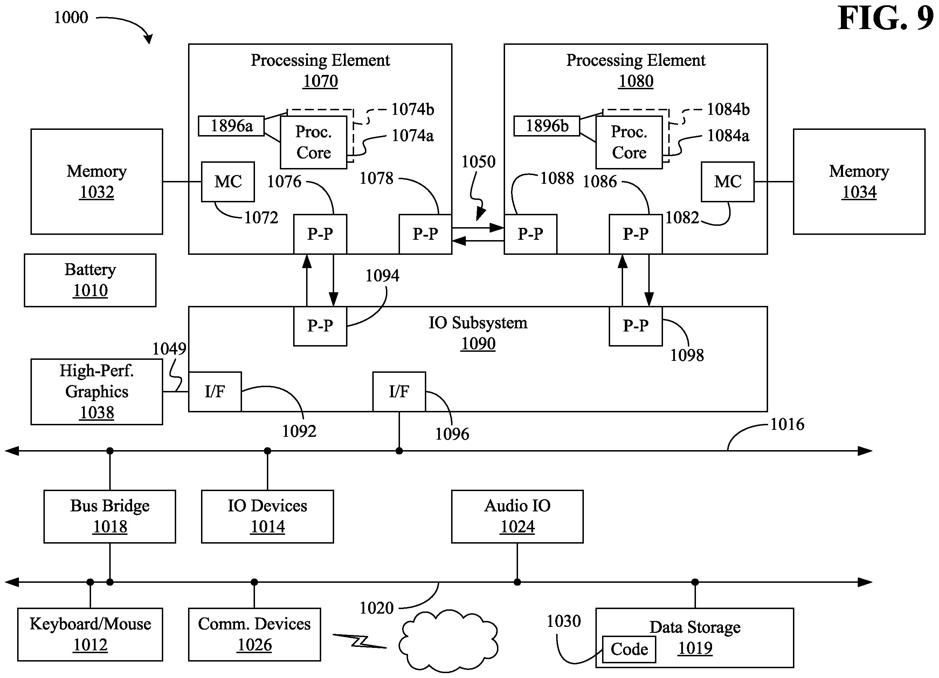

Referring now to FIG. 9, shown is a block diagram of a computing system 1000 embodiment in accordance with an embodiment. Shown in FIG. 9 is a multiprocessor system 1000 that includes a first processing element 1070 and a second processing element 1080. While two processing elements 1070 and 1080 are shown, it is to be understood that an embodiment of the system 1000 may also include only one such processing element.

The system 1000 is illustrated as a point-to-point interconnect system, wherein the first processing element 1070 and the second processing element 1080 are coupled via a point-to-point interconnect 1050. It should be understood that any or all of the interconnects illustrated in FIG. 9 may be implemented as a multi-drop bus rather than point-to-point interconnect.

As shown in FIG. 9, each of processing elements 1070 and 1080 may be multicore processors, including first and second processor cores (i.e., processor cores 1074a and 1074b and processor cores 1084a and 1084b). Such cores 1074a, 1074b, 1084a, 1084b may be configured to execute instruction code in a manner similar to that discussed above in connection with FIG. 8.

Each processing element 1070, 1080 may include at least one shared cache 1896a, 1896b. The shared cache 1896a, 1896b may store data (e.g., instructions) that are utilized by one or more components of the processor, such as the cores 1074a, 1074b and 1084a, 1084b, respectively. For example, the shared cache 1896a, 1896b may locally cache data stored in a memory 1032, 1034 for faster access by components of the processor. In one or more embodiments, the shared cache 1896a, 1896b may include one or more mid-level caches, such as level 2 (L2), level 3 (L3), level 4 (L4), or other levels of cache, a last level cache (LLC), and/or combinations thereof.

While shown with only two processing elements 1070, 1080, it is to be understood that the scope of the embodiments is not so limited. In other embodiments, one or more additional processing elements may be present in a given processor. Alternatively, one or more of processing elements 1070, 1080 may be an element other than a processor, such as an accelerator or a field programmable gate array. For example, additional processing element(s) may include additional processors(s) that are the same as a first processor 1070, additional processor(s) that are heterogeneous or asymmetric to processor a first processor 1070, accelerators (such as, e.g., graphics accelerators or digital signal processing (DSP) units), field programmable gate arrays, or any other processing element. There can be a variety of differences between the processing elements 1070, 1080 in terms of a spectrum of metrics of merit including architectural, micro architectural, thermal, power consumption characteristics, and the like. These differences may effectively manifest themselves as asymmetry and heterogeneity amongst the processing elements 1070, 1080. For at least one embodiment, the various processing elements 1070, 1080 may reside in the same die package.

The first processing element 1070 may further include memory controller logic (MC) 1072 and point-to-point (P-P) interfaces 1076 and 1078. Similarly, the second processing element 1080 may include a MC 1082 and P-P interfaces 1086 and 1088. As shown in FIG. 9, MC's 1072 and 1082 couple the processors to respective memories, namely a memory 1032 and a memory 1034, which may be portions of main memory locally attached to the respective processors. While the MC 1072 and 1082 is illustrated as integrated into the processing elements 1070, 1080, for alternative embodiments the MC logic may be discrete logic outside the processing elements 1070, 1080 rather than integrated therein.

The first processing element 1070 and the second processing element 1080 may be coupled to an I/O subsystem 1090 via P-P interconnects 1076 1086, respectively. As shown in FIG. 9, the I/O subsystem 1090 includes P-P interfaces 1094 and 1098. Furthermore, I/O subsystem 1090 includes an interface 1092 to couple I/O subsystem 1090 with a high performance graphics engine 1038. In one embodiment, bus 1049 may be used to couple the graphics engine 1038 to the I/O subsystem 1090. Alternately, a point-to-point interconnect may couple these components.

In turn, I/O subsystem 1090 may be coupled to a first bus 1016 via an interface 1096. In one embodiment, the first bus 1016 may be a Peripheral Component Interconnect (PCI) bus, or a bus such as a PCI Express bus or another third generation I/O interconnect bus, although the scope of the embodiments are not so limited.

As shown in FIG. 9, various I/O devices 1014 (e.g., biometric scanners, speakers, cameras, sensors) may be coupled to the first bus 1016, along with a bus bridge 1018 which may couple the first bus 1016 to a second bus 1020. In one embodiment, the second bus 1020 may be a low pin count (LPC) bus. Various devices may be coupled to the second bus 1020 including, for example, a keyboard/mouse 1012, communication device(s) 1026, and a data storage unit 1019 such as a disk drive or other mass storage device which may include code 1030, in one embodiment. The illustrated code 1030 may implement and/or perform one or more aspects of the computing architecture 100 (FIG. 1), method 300 (FIG. 2), process 350 (FIG. 3), process 400 (FIG. 4) and/or pruning procedure 450 (FIG. 5), already discussed. Further, an audio I/O 1024 may be coupled to second bus 1020 and a battery 1010 may supply power to the computing system 1000. Note that other embodiments are contemplated. For example, instead of the point-to-point architecture of FIG. 9, a system may implement a multi-drop bus or another such communication topology. Also, the elements of FIG. 9 may alternatively be partitioned using more or fewer integrated chips than shown in FIG. 9.

Additional Notes and Examples:

Example 1 includes a computing device comprising a storage device to store a plurality of graphs associated with computer codes, a graphics processor, a host processor, and a memory including a set of instructions, which when executed by one or more of the graphics processor or the host processor, cause the computing device to identify a query code, translate the query code into a query graph, generate a candidate vector based on a candidate graph, wherein the candidate graph is to be associated with a candidate code of the computer codes, generate a query vector based on the query graph, and determine a similarity measurement between the query vector and the candidate vector.

Example 2 includes the computing device of Example 1, wherein the instructions, when executed, cause the computing device to translate the query code from a source language into an intermediate representation that is to be a hardware agnostic representation of the query code, generate code expressions from the intermediate representation, and generate the query graph based on the code expressions, wherein the query graph is to represent dependencies between the code expressions.

Example 3 includes the computing device of Example 1, wherein the instructions, when executed, cause the computing device to determine whether to add the candidate graph to a similarity list based on the similarity measurement.

Example 4 includes the computing device of Example 1, wherein the instructions, when executed, cause the computing device to identify a plurality of graphs that each correspond to a different candidate code, generate a plurality of candidate vectors for the plurality of graphs, generate similarity scores between the plurality of candidate vectors and the query vector, and identify a final graph from the plurality of graphs based on the similarity scores.

Example 5 includes the computing device of Example 4, wherein the instructions, when executed, cause the computing device to generate a function based on the final graph and a number of the plurality of graphs.

Example 6 includes the computing device of any one of Examples 1 to 5, wherein the query code is to correspond to a search query by a first user, the query graph is to represent semantics and structure of the query code, the candidate code is to be associated with a second user, the candidate graph is to represent semantics and structure of the candidate code, the query vector is to be a first sparse binary feature vector, the candidate vector is to be a second sparse binary feature vector, and the similarity measurement is to represent a level of similarity between the query code and the candidate code.

Example 7 includes a semiconductor apparatus comprising one or more substrates, and logic coupled to the one or more substrates, wherein the logic is implemented in one or more of configurable logic or fixed-functionality logic hardware, the logic coupled to the one or more substrates to identify a query code, translate the query code into a query graph, generate a candidate vector based on a candidate graph, wherein the candidate graph is to be associated with a candidate code, generate a query vector based on the query graph, and determine a similarity measurement between the query vector and the candidate vector.

Example 8 includes the apparatus of Example 7, wherein the logic coupled to the one or more substrates is to translate the query code from a source language into an intermediate representation that is to be a hardware agnostic representation of the query code, generate code expressions from the intermediate representation, and generate the query graph based on the code expressions, wherein the query graph is to represent dependencies between the code expressions.

Example 9 includes the apparatus of Example 7, wherein the logic coupled to the one or more substrates is to determine whether to add the candidate graph to a similarity list based on the similarity measurement.

Example 10 includes the apparatus of Example 7, wherein the logic coupled to the one or more substrates is to identify a plurality of graphs that each correspond to a different candidate code, generate a plurality of candidate vectors for the plurality of graphs, generate similarity scores between the plurality of candidate vectors and the query vector, and identify a final graph from the plurality of graphs based on the similarity scores.

Example 11 includes the apparatus of Example 10, wherein the logic is to generate a function based on the final graph and a number of the plurality of graphs.

Example 12 includes the apparatus of any one of Examples 7 to 11, wherein the query code is to correspond to a search query by a first user, the query graph is to represent semantics and structure of the query code, the candidate code is to be associated with a second user, the candidate graph is to represent semantics and structure of the candidate code, the query vector is to be a first sparse binary feature vector, the candidate vector is to be a second sparse binary feature vector, and the similarity measurement is to represent a level of similarity between the query code and the candidate code.

Example 13 includes the apparatus of any one of Examples 7 to 11, wherein the logic coupled to the one or more substrates includes transistor channel regions that are positioned within the one or more substrates.

Example 14 includes at least one computer readable storage medium comprising a set of instructions, which when executed by a computing device, cause the computing device to identify a query code, translate the query code into a query graph, generate a candidate vector based on a candidate graph, wherein the candidate graph is to be associated with a candidate code, generate a query vector based on the query graph, and determine a similarity measurement between the query vector and the candidate vector.

Example 15 includes the at least one computer readable storage medium of Example 14, wherein the instructions, when executed, cause the computing device to translate the query code from a source language into an intermediate representation that is to be a hardware agnostic representation of the query code, generate code expressions from the intermediate representation, and generate the query graph based on the code expressions, wherein the query graph is to represent dependencies between the code expressions.

Example 16 includes the at least one computer readable storage medium of Example 14, wherein the instructions, when executed, cause the computing device to determine whether to add the candidate graph to a similarity list based on the similarity measurement.

Example 17 includes the at least one computer readable storage medium of Example 14, wherein the instructions, when executed, cause the computing device to identify a plurality of graphs that each correspond to a different candidate code, generate a plurality of candidate vectors for the plurality of graphs, generate similarity scores between the plurality of candidate vectors and the query vector, and identify a final graph from the plurality of graphs based on the similarity scores.

Example 18 includes the at least one computer readable storage medium of Example 17, wherein the instructions, when executed, cause the computing device to generate a function based on the final graph and a number of the plurality of graphs.

Example 19 includes the at least one computer readable storage medium of any one of Examples 14 to 18, wherein the query code is to correspond to a search query by a first user, the query graph is to represent semantics and structure of the query code, the candidate code is to be associated with a second user, the candidate graph is to represent semantics and structure of the candidate code, the query vector is to be a first sparse binary feature vector, the candidate vector is to be a second sparse binary feature vector, and the similarity measurement is to represent a level of similarity between the query code and the candidate code.

Example 20 includes a method comprising identifying a query code, translating the query code into a query graph, generating a candidate vector based on a candidate graph, wherein the candidate graph is associated with a candidate code, generating a query vector based on the query graph, and determining a similarity measurement between the query vector and the candidate vector.

Example 21 includes the method of Example 20, further including translating the query code from a source language into an intermediate representation that is a hardware agnostic representation of the query code, generating code expressions from the intermediate representation, and generating the query graph based on the code expressions, wherein the query graph represents dependencies between the code expressions.

Example 22 includes the method of Example 20, further including determining whether to add the candidate graph to a similarity list based on the similarity measurement.

Example 23 includes the method of Example 20, further including identifying a plurality of graphs that each correspond to a different candidate code, generating a plurality of candidate vectors for the plurality of graphs, generating similarity scores between the plurality of candidate vectors and the query vector, and identifying a final graph from the plurality of graphs based on the similarity scores.

Example 24 includes the method of Example 23, further including generating a function based on the final graph and a number of the plurality of graphs.

Example 25 includes the method of any one of Examples 20 to 24, wherein the query code is to correspond to a search query by a first user, the query graph is to represent semantics and structure of the query code, the candidate code is to be associated with a second user, the candidate graph is to represent semantics and structure of the candidate code, the query vector is to be a first sparse binary feature vector, the candidate vector is to be a second sparse binary feature vector, and the similarity measurement is to represent a level of similarity between the query code and the candidate code.

Example 26 includes a semiconductor apparatus comprising means for identifying a query code, means for translating the query code into a query graph, means for generating a candidate vector based on a candidate graph, wherein the candidate graph is associated with a candidate code, means for generating a query vector based on the query graph, and means for determining a similarity measurement between the query vector and the candidate vector.

Example 27 includes the apparatus of Example 26, further including means for translating the query code from a source language into an intermediate representation that is a hardware agnostic representation of the query code, means for generating code expressions from the intermediate representation, and means for generating the query graph based on the code expressions, wherein the query graph represents dependencies between the code expressions.

Example 28 includes the apparatus of Example 26, further including means for determining whether to add the candidate graph to a similarity list based on the similarity measurement.

Example 28 includes the apparatus of Example 26, further including means for identifying a plurality of graphs that each correspond to a different candidate code, means for generating a plurality of candidate vectors for the plurality of graphs, means for generating similarity scores between the plurality of candidate vectors and the query vector, and means for identifying a final graph from the plurality of graphs based on the similarity scores.

Example 29 includes the apparatus of Example 28, further including means for generating a function based on the final graph and a number of the plurality of graphs.

Example 30 includes the apparatus of any one of Examples 26 to 29, wherein the query code is to correspond to a search query by a first user, the query graph is to represent semantics and structure of the query code, the candidate code is to be associated with a second user, the candidate graph is to represent semantics and structure of the candidate code, the query vector is to be a first sparse binary feature vector, the candidate vector is to be a second sparse binary feature vector, and the similarity measurement is to represent a level of similarity between the query code and the candidate code.

Thus, technology described herein implement an efficient system for code similarity search with an AI navigation and search. The technology may be capable of learning and representing the semantics and relationships among code statements, and generating representations (e.g., hardware and language agnostic representations) across different programming languages and hardware architectures.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SOCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same.

As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the computing system within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of' may mean any combination of the listed terms. For example, the phrases "one or more of A, B or C" may mean A; B; C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.


**Claims**

1. A semiconductor apparatus comprising:

   one or more substrates; and
   logic coupled to the one or more substrates, wherein the logic is implemented in one or more of configurable logic or fixed-functionality logic hardware, the logic coupled to the one or more substrates to:

   identify a query code;
   translate the query code into a query graph;
   generate a candidate vector based on a candidate graph, wherein the candidate graph is to be associated with a candidate code;
   generate a query vector based on the query graph; and
   determine a similarity measurement between the query vector and the candidate vector.

2. The apparatus of claim 1, wherein the logic coupled to the one or more substrates is to:

   translate the query code from a source language into an intermediate representation that is to be a hardware agnostic representation of the query code;
   generate code expressions from the intermediate representation; and
   generate the query graph based on the code expressions, wherein the query graph is to represent dependencies between the code expressions.

3. The apparatus of claim 1, wherein the logic coupled to the one or more substrates is to:
   determine whether to add the candidate graph to a similarity list based on the similarity measurement.

4. The apparatus of claim 1, wherein the logic coupled to the one or more substrates is to:

   identify a plurality of graphs that each correspond to a different candidate code;
   generate a plurality of candidate vectors for the plurality of graphs;
   generate similarity scores between the plurality of candidate vectors and the query vector; and
   identify a final graph from the plurality of graphs based on the similarity scores.

5. The apparatus of claim 4, wherein the logic is to:
   generate a function based on the final graph and a number of the plurality of graphs.

6. The apparatus of any one of claims 1 to 5, wherein:

the query code is to correspond to a search query by a first user;
the query graph is to represent semantics and structure of the query code;
the candidate code is to be associated with a second user;
the candidate graph is to represent semantics and structure of the candidate code;
the query vector is to be a first sparse binary feature vector;
the candidate vector is to be a second sparse binary feature vector; and
the similarity measurement is to represent a level of similarity between the query code and the candidate code.

7. The apparatus of any one of claims 1 to 5, wherein the logic coupled to the one or more substrates includes transistor channel regions that are positioned within the one or more substrates.

8. At least one computer readable storage medium comprising a set of instructions, which when executed by a computing device, cause the computing device to:

identify a query code;
translate the query code into a query graph;
generate a candidate vector based on a candidate graph, wherein the candidate graph is to be associated with a candidate code;
generate a query vector based on the query graph; and
determine a similarity measurement between the query vector and the candidate vector.

9. The at least one computer readable storage medium of claim 8, wherein the instructions, when executed, cause the computing device to:

translate the query code from a source language into an intermediate representation that is to be a hardware agnostic representation of the query code;
generate code expressions from the intermediate representation; and
generate the query graph based on the code expressions, wherein the query graph is to represent dependencies between the code expressions.

10. The at least one computer readable storage medium of claim 8, wherein the instructions, when executed, cause the computing device to:
determine whether to add the candidate graph to a similarity list based on the similarity measurement.

11. The at least one computer readable storage medium of claim 8, wherein the instructions, when executed, cause the computing device to:

identify a plurality of graphs that each correspond to a different candidate code;
generate a plurality of candidate vectors for the plurality of graphs;
generate similarity scores between the plurality of candidate vectors and the query vector; and
identify a final graph from the plurality of graphs based on the similarity scores.

12. The at least one computer readable storage medium of claim 11, wherein the instructions, when executed, cause the computing device to:
generate a function based on the final graph and a number of the plurality of graphs.

13. The at least one computer readable storage medium of any one of claims 8 to 12, wherein:

the query code is to correspond to a search query by a first user;
the query graph is to represent semantics and structure of the query code;
the candidate code is to be associated with a second user;
the candidate graph is to represent semantics and structure of the candidate code;
the query vector is to be a first sparse binary feature vector;
the candidate vector is to be a second sparse binary feature vector; and
the similarity measurement is to represent a level of similarity between the query code and the candidate code.

**14.** An enhanced searching method comprising:

identifying a query code;
translating the query code into a query graph;
generating a candidate vector based on a candidate graph, wherein the candidate graph is associated with a candidate code;
generating a query vector based on the query graph; and
determining a similarity measurement between the query vector and the candidate vector.

**15.** The method of claim 14, further including:

translating the query code from a source language into an intermediate representation that is a hardware agnostic representation of the query code;
generating code expressions from the intermediate representation; and
generating the query graph based on the code expressions, wherein the query graph represents dependencies between the code expressions.

FIG. 1

300

Begin

Identify a query code

302

Translate the query code into a query graph;

304

Generate a candidate vector based on a candidate graph, where the candidate graph is to be associated with a candidate code

306

Generate a query vector based on the query graph

308

Determine a similarity measurement between the query vector and the candidate vector

310

End

# FIG. 2

**FIG. 3**

**FIG. 4**

EP 3 929 767 A1

FIG. 5

**FIG. 6**

**FIG. 7**

**FIG. 8**

FIG. 9

**EP 3 929 767 A1**

Europäisches Patentamt
European Patent Office
Office européen des brevets

**EUROPEAN SEARCH REPORT**

Application Number

EP 20 21 4019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANH TUAN NGUYEN ET AL: "Graph-based pattern-oriented, context-sensitive source code completion", SOFTWARE ENGINEERING (ICSE), 2012 34TH INTERNATIONAL CONFERENCE ON, IEEE, 2 June 2012 (2012-06-02), pages 69-79, XP032195377, DOI: 10.1109/ICSE.2012.6227205 ISBN: 978-1-4673-1066-6 * abstract * * page 69, right-hand column, paragraph 2 * * page 71, left-hand column, paragraph 5-8 * * page 71, right-hand column, paragraph 3 - last * * page 72, left-hand column, paragraph 1 - right-hand column, paragraph 3; figures 3,5 * * page 73, left-hand column, paragraph 5-6 * * page 73, right-hand column, paragraph 3 - page 74, right-hand column, paragraph 1 * * page 75, right-hand column, paragraph 4 * ----- | 1-15 | INV. G06F16/33 G06F16/908 ADD. G06F16/903 G06K9/46 G06K9/68 G06N3/00 G06N3/08 |
| X | US 2011/246968 A1 (ZHANG DONGMEI [US] ET AL) 6 October 2011 (2011-10-06) * paragraphs [0004] - [0005] * * paragraphs [0033] - [0051]; figure 2 * * paragraphs [0052] - [0065]; figure 3 * * paragraphs [0086] - [0095]; figure 7 * ----- -/-- | 1-15 | TECHNICAL FIELDS SEARCHED (IPC) G06F |

The present search report has been drawn up for all claims

| Place of search | Date of completion of the search | Examiner |
|---|---|---|
| Munich | 19 May 2021 | Wohner, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAOJUN XU ET AL: "Neural Network-based Graph Embedding for Cross-Platform Binary Code Similarity Detection", ARXIV.ORG, CORNELL UNIVERSITY LIBRARY, 201 OLIN LIBRARY CORNELL UNIVERSITY ITHACA, NY 14853, 22 August 2017 (2017-08-22), XP081409341, DOI: 10.1145/3133956.3134018 * page 2, left-hand column, paragraph 3 - right-hand column, paragraph 4 * * page 2, right-hand column, last paragraph * * page 4, right-hand column, paragraph 5 - page 7, right-hand column, paragraph 3 * ----- | 1-15 | |
| X | US 10 048 945 B1 (MAKKAR TUSHAR [IN]) 14 August 2018 (2018-08-14) * column 1, line 54 - column 2, line 48 * * column 14, line 6 - column 15, line 58; figure 3 * ----- | 1-15 | |
| X | US 2020/104631 A1 (ZHANG BO [US] ET AL) 2 April 2020 (2020-04-02) * paragraphs [0006] - [0007] * * paragraphs [0042] - [0047]; figure 4 * ----- | 1-15 | TECHNICAL FIELDS SEARCHED (IPC) |

The present search report has been drawn up for all claims

| Place of search | Date of completion of the search | Examiner |
|---|---|---|
| Munich | 19 May 2021 | Wohner, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 4019

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2021

| Patent document cited in search report | | Publication date | Patent family member(s) | | Publication date |
|---|---|---|---|---|---|
| US 2011246968 | A1 | 06-10-2011 | NONE | | |
| US 10048945 | B1 | 14-08-2018 | EP | 3631617 A1 | 08-04-2020 |
| | | | US | 10048945 B1 | 14-08-2018 |
| | | | US | 2018349106 A1 | 06-12-2018 |
| | | | US | 2020249919 A1 | 06-08-2020 |
| | | | WO | 2018217741 A1 | 29-11-2018 |
| US 2020104631 | A1 | 02-04-2020 | NONE | | |

EPO FORM P0459

For more details about this annex : see Official Journal of the European Patent Office, No. 12/82